# EUROPEAN PATENT SPECIFICATION

(11) **EP 3 325 823 B1**
(45) Date of publication and mention of the grant of the patent: **09.09.2020**
(21) Application number: 16741767.4
(22) Date of filing: 12.07.2016
(51) Int. Cl.: F16B 19/02, F16B 39/24, F16B 41/00, F16B 43/00

(54) **FASTENER AND FASTENER SYSTEM FOR SOFT MATERIALS**
BEFESTIGUNGSMITTEL UND BEFESTIGUNGSSYSTEM FÜR WEICHE MATERIALIEN
DISPOSITIF DE FIXATION ET SYSTÈME DE FIXATION POUR MATÉRIAUX TENDRES

(30) Priority: 21.07.2015 US 201562194994 P
(43) Date of publication of application: 30.05.2018
(73) Proprietor: Illinois Tool Works Inc., Glenview, IL 60025 (US)
(72) Inventor: SANTOS, Nelson, Glenview, Illinois 60025 (US); DA ROCHA, Bruno, Glenview, Illinois 60025 (US); SZCZUKOWSKI,Adi, Glenview, Illinois 60025 (US)
(74) Representative: HGF
(86) International application number: PCT/US2016/041843
(87) International publication number: WO 2017/014988

(56) References cited:
- EP-A2- 2 110 567
- DE-U1- 9 100 658
- DE-U1-202013 101 020
- US-A- 1 379 473
- US-A- 1 894 631
- US-A- 2 244 976
- US-A- 2 424 208
- US-A- 2 931 412
- US-A1- 2003 108 401

## Description

### CROSS-REFERENCE TO RELATED APPLICATIONS

The present application claims the benefits of United States Provisional Application Serial No. 62/194,994, filed July 21, 2015.

### FIELD OF THE INVENTION

The present invention relates generally to threaded fasteners and, more particularly, to threaded fasteners useful for fastening soft materials over an extended period of time.

### BACKGROUND OF THE INVENTION

Many types of threaded fasteners are known. Documents US 2003/0108401A and US 2 244 976 A show fastener systems of the prior art. In a simple nut and bolt fastening system, it is sometimes difficult to maintain a desired clamp load over an extended period of time. Over time, elongation, deformation or other changes in the engaged threads of the nut and bolt can cause loosening of the fastened connection. Further difficulties have been encountered when a threaded fastener is used to connect relatively soft materials, such as plastic. Many plastics do not require a high clamp load to be kept in place. However, metal threaded fasteners, for example, require sufficient clamp load between the mating male and female threaded components so that stretch occurs in the threads. Often, the clamp load required for the fastener is greater than the clamp load required for the plastic components being assembled.

Shoulder bolts, bushings and other types of sleeves have been used in fastening situations requiring greater clamp load of the male and female threaded components than required by the object(s) being fastened together. However, the shoulder, sleeve or bushing must be provided in accurate dimensions so that a sufficient, but not excessive clamp load is applied against the object(s) being fastened, with a greater clamp load provided within the fastener threaded components themselves. If the shoulder, bushing or sleeve is not accurately sized, or if the objects that are fastened vary in thickness within the area to be fastened, the fastener may not function as desired. In addition to the difficulty in providing the fastener in a way to function as desired, fasteners of these types have been expensive to manufacture.

A still further difficulty that has been encountered when fastening plastic and other soft materials is that plastic continues to flow even after it is cured. This phenomenon, known as "creep" can result in significant dimensional changes in plastic elements over time. This further complicates the use of simple threaded fasteners when connecting one or more object made of plastic to another object. If creep reduces the clamp load sufficient to loosen or relieve stretch in the threads, the fastener becomes loose and can rotate, which mat cause total disengagement.

Accordingly, it is desirable to have a simple threaded fastener useful for clamping soft materials which resists loosening under conditions such as creep that are known to happen with plastic over time, and that works effectively even under varying conditions of the object being fastened.

### SUMMARY OF THE INVENTION

The invention is a fastening system with the features of claim 1. The present threaded fastener provides individual locking features within the fastener structure so that a proper clamp load is provided even under varying conditions and the components resist loosening even as the conditions of the fastened objects change over time.

In accordance with an embodiment of the invention, a threaded fastener system is provided with an object to be fastened having a surface defining an elongated hole in the object, the surface further defining a channel in the hole; a washer having an outwardly extending arm received in the channel; a locking feature defined on the washer; and a bolt received in the washer and having a projection engaged with the locking feature and resisting relative rotation between the washer and the bolt.

An advantage of at least one form of the fastener in fastener system disclosed herein is that the fastener remains secure even while securing objects of soft materials and will remain connected even if the fastened assembly becomes loose.

Another advantage of at least one form of the fastener and fastener system disclosed herein is that a bolt of the fastener is restrained against rotation even if the fastened assembly becomes loose due to material shrinkage or change.

Other features and advantages of the invention will become apparent to those skilled in the art upon review of the following detailed description, claims and drawings in which like numerals are used to designate like features.

### BRIEF DESCRIPTION OF THE DRAWINGS

Figs. 1a, through Id are a series of cross-sectional views illustrating four steps or stages in a fastening procedure using the threaded fastener disclosed herein;
Fig. 2 is a fragmentary cross-sectional enlargement of the fastener at an intermediate stage of the fastening process, more particularly the condition of the fastening components as shown in Fig. 1c;
Fig. 3 is a fragmentary, cross-sectional enlargement of the fastener at completion of installation, as shown in Fig. Id;
Fig. 4 is a perspective view of the male component for the threaded fastener disclosed herein;
Fig. 5 is a perspective view of a washer component for the threaded fastener disclosed herein;
Fig. 6 is another perspective view of the washer component, illustrating the washer component from an angle different from that shown in Fig. 5;
Fig. 7 is a plan view illustrating a hole in an object to be fastened by the threaded fastener;
Fig. 8 is a cross-sectional view of the object shown in Fig. 7, the cross-section having been taken on line A-A of Fig. 7;
Fig. 9 is another cross-sectional view similar to that of Fig. 8, but shown from a perspective angle to better illustrate features of the hole in the object;
Fig. 10 is an enlarged fragmentary view of the circled area designated with the letter "B" in Fig. 8;
Fig. 11 is a perspective view of another embodiment for a washer of the threaded fastener disclosed herein;
Fig. 12 is an elevational view of the washer shown in Fig. 11;
Fig. 13 is a cross-sectional view of the washer shown in Figs. 11 & 12; and
Fig. 14 is a top view of the washer shown in Figs. 11-13.

Before the embodiments of the invention are explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein are for the purpose of description and should not be regarded as limiting. The use herein of "including", "comprising" and variations thereof is meant to encompass the items listed thereafter and equivalents thereof, as well as additional items and equivalents thereof.

### DETAILED DESCRIPTION OF THE PREFERRED EMBODIMENT

Referring now more specifically to the drawings and to Figs la-1d in particular, a threaded fastener 10 includes a male threaded component or bolt 12, a washer 14 and an object to be fastened 16. As will be explained more fully hereinafter, fastener 10 includes features such that washer 14 is locked to object 16 independently of the clamp load provided by the fastener, and male threaded component 12 is locked to washer 14. Accordingly, once fastened, male threaded fastener 12 resists unintentional disengagement from the threaded assembly, even if the fastened assembly changes over time.

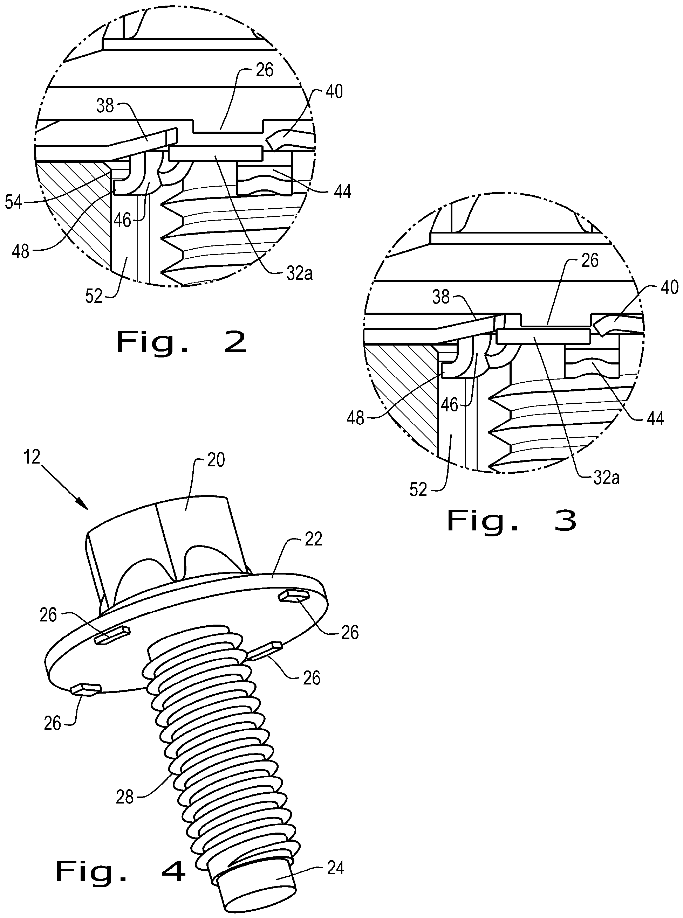

With reference now to Fig. 4, bolt 12 includes a head 20, a flange 22 and a threaded shank 24. Head 20 can be provided with a suitable shape or configuration to be engaged by a tool or implement to be rotated thereby. Accordingly, head 20 can be configured to receive a wrench, socket, screwdriver or other suitable implement or tool, so as to be rotated mechanically or by hand when completing the fastened assembly. Flange 22 projects outwardly beyond head 20, and on the underside thereof relative to head 20 is substantially smooth but includes one or several knobs or projections 26 extending generally in an axial direction, that is axially away from the under surface of flange 22. In the exemplary embodiment shown, flange 22 includes four projections 26, but it should be understood that more or fewer projections also can be used. Threaded shank 24 defines a screw thread 28 thereon, which can be of any suitable simple or complex thread configuration. Thread 28 can extend for substantially the length of shank 26, or can extend for some suitable portion of shank 26 as required by the application and use of threaded fastener 10.

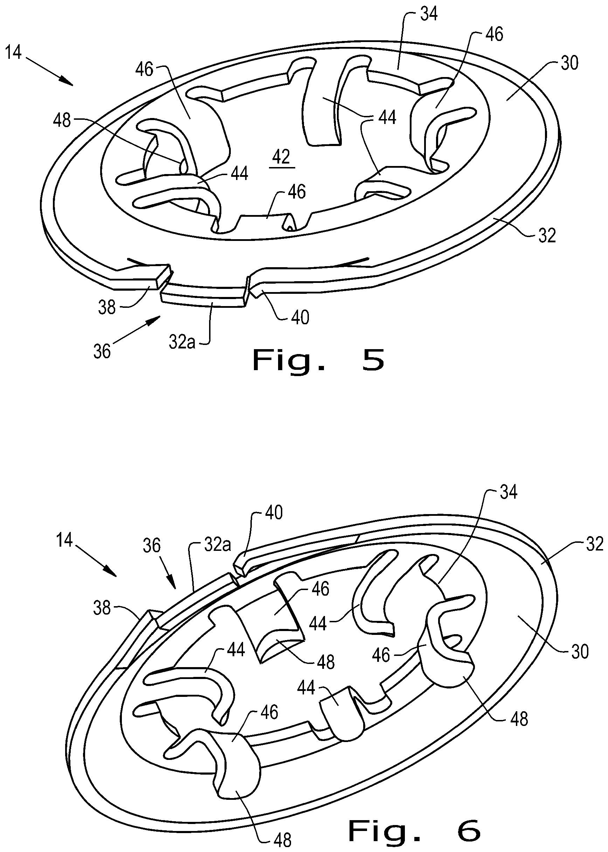

Referring now to Figs. 5 and 6, washer 14 is shown from a top perspective and a bottom perspective, respectively. Washer 14 is a spring or compression washer and includes a main body 30 of a moderate dome shape. That is, an outer rim 32 of washer 14 is at a first relative elevation or height with respect to body 30, and an inner rim 34 is at a different relative elevation or height with respect to body 3, as viewed when washer 14 is disposed on a substantially vertically oriented bolt, as depicted in the drawings. Accordingly, in such an orientation of washer 14, which is referred to herein for description purposes as a vertical orientation of washer 14, body 30 is angularly disposed between outer rim 32 and inner rim 34, extending upwardly from outer rim 32 to inner rim 34 as shown in the drawings. It should be understood, however, that fastener 10, and therefor washer 14 can be used in any orientation, and need not be vertically oriented.

Outer rim 32 defines a locking feature 36, which includes spaced tabs 38 and 40. Each of tabs 38, 40 is formed by short, substantially radially oriented cuts from the outer edge of outer rim 32 and substantially circumferential cuts extending therefrom. Tabs 38 and 40 are bent upwardly from the plane of outer rim 32 from the perspective of washer 14 in a substantially vertical orientation. Tabs 38 and 40 are separated by a rim segment 32a.

Washer 14 further defines a center opening 42 therein and defines a plurality of inwardly extending projections 44 in the way of inwardly extending arms 44. Washer 14 further defines outwardly extending arms 46. In the exemplary embodiment shown, washer 14 defines three inwardly extending arms 44 and three outwardly extending arms 46; however, more or fewer arms also can be used. Each of the arms 44, 46 is rather thin, narrow and elongated to provide a natural springiness or deflectability for the purposes to be described.

Inwardly extending arms 44 are configured to be received on bolt 12, more particularly on shank 24 of bolt 12. In the exemplary embodiment with thread 28 extending up to flange 22, inwardly extending arms 44 are received on the outer edge of thread 28. The opening defined between inwardly extending arms 44 is somewhat less than the outer diameter at the point at which washer 14 is received on shank 24 so that inwardly extending arms 44 are deflected when installed on shank 24, thereby holding washer 14 on shank 24 due to the natural springiness of inwardly extending arms 44. It is preferred that washer 14 be centered on shank 24, and the use of three inwardly extending arms 44 promotes the desired centering; however, it should be understood that more or fewer inwardly extending arms also can be used. In the exemplary embodiment, inwardly extending arms 44 are somewhat hook shaped, with the rounded innermost curved portion engaging the edge of thread 28. However, it should be understood that other shapes and configurations can be used for inwardly extending arms 44 as well.

Outwardly extending arms 46 also are somewhat hooked shaped and have distal portions or tips 48 projecting outwardly. In the exemplary embodiment shown, three outwardly extending arms 46 are used; however, it should be understood with the further description of the object to be fastened 16 to follow, that more or fewer outwardly extending arms 46 can be used. Outwardly extending arms 46 engage object 16 in a manner to be described to resist rotation relative to object 16 when fully installed.

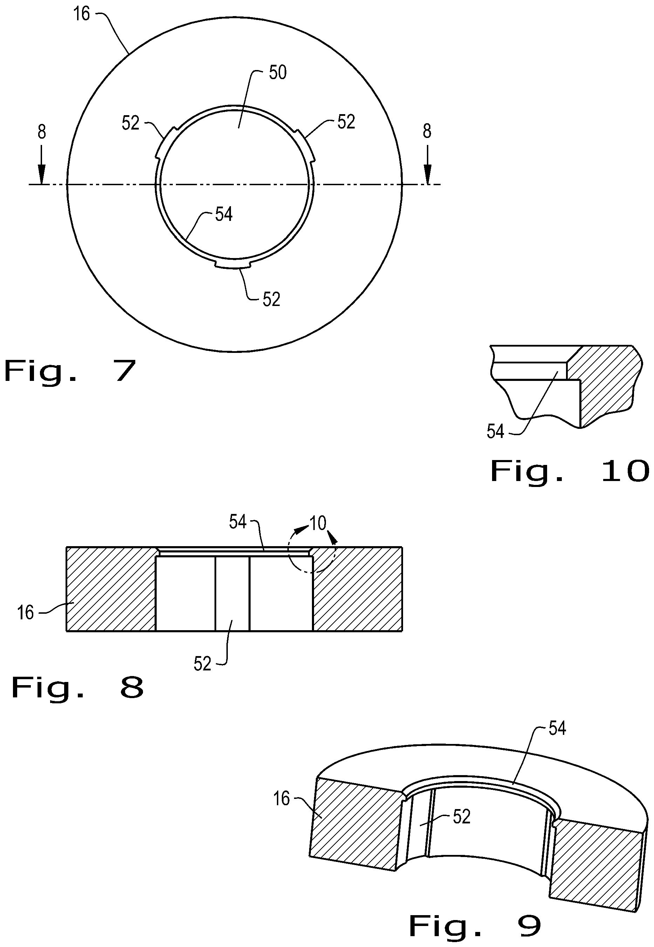

With reference now to Figs. 7, 8 and 9, an object to be fastened in a completed fastened assembly, and to be positioned immediately below flange 22 is provided with a shaped and sized hole 50 formed as a surface thereof. The surface defining hole 50 is provided with axially extending channels 52 therein, channels 52 being provided in an equal number and spacing so as to receive tips 48 of outwardly extending arms 46. Outwardly extending arms 46 define an outer radius slightly greater than the inner diameter of hole 50 as defined by the lands or areas between axially extending channels 52. Accordingly, if washer 14 is applied to object 16, with outwardly extending arms 46 placed in hole 50, outwardly extending arms 46 are deflected inwardly if tips 48 are against surfaces between channels 52, and the arms spring outwardly when tips 48 align with channels 52.

As yet a further feature thereof, hole 50 of object 16 is provided with a tapered, inwardly projecting shoulder 54 at the upper edge thereof. In the exemplary embodiment shown, shoulder 54 extends circumferentially around the entire opening of hole 50. However, the shoulder can also take on the other configurations, and may be provided only at the ends of channels 52 in some applications and uses of the threaded fastener disclosed herein. An enlarged view of shoulder 54 is shown in Fig. 10.

It should be understood that, in many applications and uses for the threaded fastener described herein, object 16 will be a plastic or other component manufactured by casting or molding, such that the shape of hole 50, including channels 52 and shoulder 54 can be provided without expensive machining or fabricating.

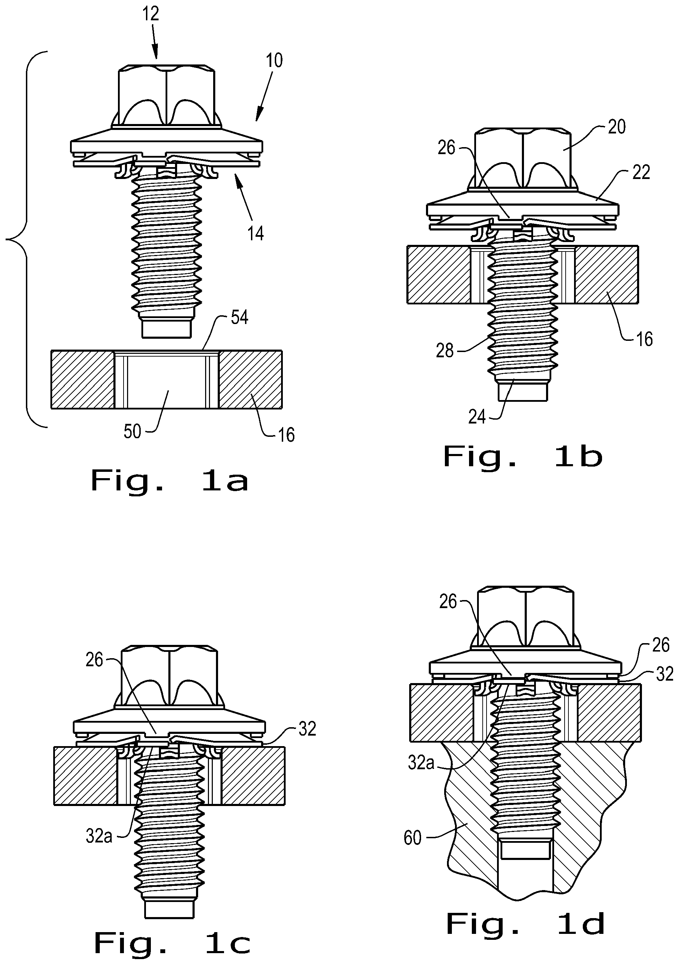

With reference now again to Figs 1a through Fig. 1d, the manner in which fastener 10 is used will be described with respect to four steps. It should be understood that the process for using fastener 10 is not necessarily defined by distinct steps; however, various aspects of the process can be described with respect to the condition of the fastener components at the various stages or steps shown in Figs 1a -1d. Further, the processor order can be changed in some applications and uses, as will be described hereinafter.

With reference first to Fig 1a, washer 14 has been preassembled onto bolt 12. As described previously, inwardly extending arms 44 are engaged against thread 28, with washer 14 substantially at and against the underside of flange 22. The natural resistance provided by the deflection of inwardly extending arms 44 retains washer 14 in the position at which it is placed on threaded shank 24. The assembled bolt 12 and washer 14 are aligned with hole 50 in object 16 so that threaded shank 24 can be placed into and through hole 50.

With reference now to Figs 1b and 1c, the assembly of bolt 12 and washer 14 is advanced such that outwardly extending arms 46 engage shoulder 54. The application of continued axial force against bolt 12 or washer 14 causes outwardly extending arms 46 to deflect inwardly so that tips 48 slide past shoulder 54. The angle, size and shape of shoulder 54, and the sizes, shapes and configurations of tips 48 can be provided so as to promote smooth deflection of outwardly extending arms 46 with minimal axial force applied against washer 14. If tips 48 are aligned with channels 52, the tips will spring outwardly and settle into the channels as the tips move past shoulder 54. If tips 48 instead are aligned with lands between channels 52, the assembly of bolt 12 and washer 14 can be rotated until tips 48 become aligned with and are snapped into channels 52.

It should be appreciated that as shown in Fig. 1a, washer 14 can be preassembled onto bolt 12. However, it should be further appreciated that washer 14 also can be preassembled onto object 16, with or without bolt 12. With tips 48 received in channels 52, washer 14 is held in object 16, since shoulder 54 inhibits the washer from being withdrawn out of hole 50, and channels 52 inhibit rotation of washer 14 relative to object 16. The manner in which a tip 48 is captured in a channel 52 beneath shoulder 54 is more readily seen in the enlargement of Fig. 2. Washer 14 can be provided preassembled to either bolt 12 or object 16 and the entire preassembly of bolt 12, washer 14 and object 16 can be provided for later attachment in an assembly.

With reference now to Fig. Id, object 16 is shown fastened to an article 60 which threadedly engages thread 28 of threaded shank 24. It should be understood that article 60 can be another assembly or component or can be a nut or other female threaded article. Further, article 60 can be unthreaded, with thread 28 being a thread cutting thread to establish its own engagement with article 60. It should be further understood that one or more other objects, articles or structures can be positioned within the final assembly between washer 14 and the terminal fastened end of threaded shank 24, article 60, which can be a nut 60.

As bolt 12 is tightened into article 60, washer 14 is compressed to provide a spring biasing between the upper surface of object 16 and the underside of flange 22. As final tightening occurs, one of the knobs or projections 26 on the underside of flange 22 rides up and over a locking tab 38, 40 (depending on the "hand" of the thread), first deflecting the flange downwardly and then settling into and against outer rim segment 32a as the deflected tab rebounds outwardly. As a result, one of the knobs or protrusions 26 is captured between locking tabs 38, 40 and against outer rim segment 32a of locking features 36. It should be understood that the clamp load is accurately controlled regardless of the initial orientation of bolt 12, since a plurality of projections 26 are provided and only a partial turn of bolt 12 is required to move from a projection 26 not sufficiently close so as to deflect a locking tab 38, 40 to the next projection that will deflect a tab and be captured between the tabs. The capture of a projection 26 between locking tabs 38, 40 is more clearly seen in Fig. 3.

In the completed assembly, washer 14 is secured to object 16 by the capture of tips 48 within channels 52 and beneath shoulder 54. Accordingly, washer 14 is not easily dislodged there from. Bolt 12 is threadedly engaged with article 60 and is secured against rotation relative to washer 14 by the knob or projection 26 captured between locking tabs 38, 40 of locking feature 36. Accordingly, even if the clamp load loosens due to shrinkage or creep of object 16 and/or article 60 the fastened assembly will not disengage because bolt 12 cannot rotate relative to washer 14, washer 14 cannot rotate relative to object 16 and washer 14 cannot be extracted axially from object 16. Therefore, the threaded engagement of bolt 12 in article 60 cannot be changed as the bolt will not rotate relative to article 60. Further, since washer 14 is a spring washer some change in the fastened assembly can be accommodated or absorbed by the compressed washer.

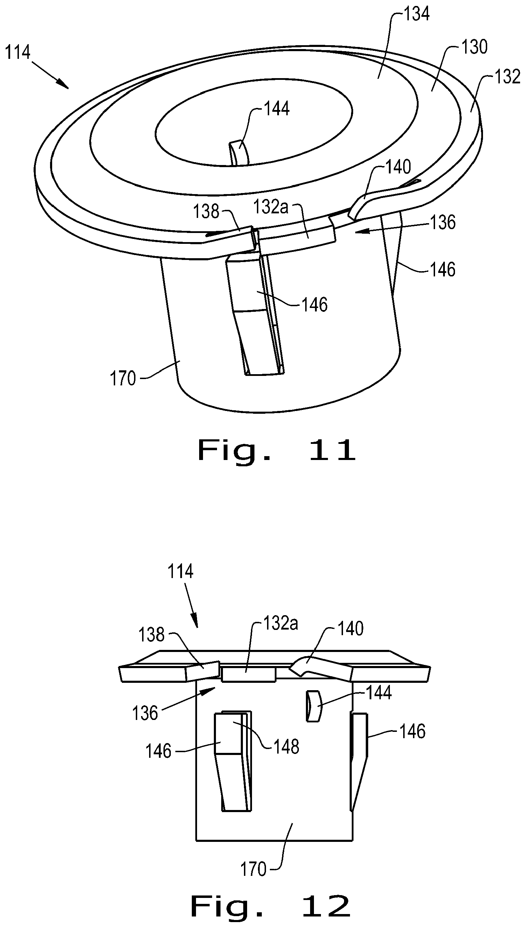

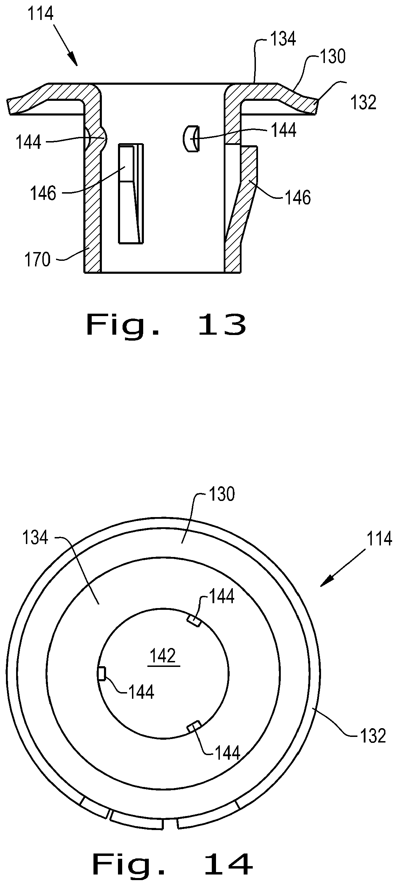

The concepts for a threaded fastener disclosed herein can be practiced in other structural ways. For example, Figs. 11-14 illustrate another embodiment of a washer 114 which is similar in many aspects to washer 14 described previously and different in other aspects. Washer 114 includes a washer body 130, outer rim 132 and inner rim 134 that are similar to washer body 30, outer rim 32 and inner rim 34 described previously. A locking feature 136, similar to locking feature 36, includes locking tabs 138, 140 and outer rim segment 132a, similar to locking tabs 38, 40 and outer rim segment 32a described previously.

Washer 114 further defines a center opening 142 through a sleeve 170, sleeve 170 extending axially from inner rim 134. Sleeve 170 is provided with structures for engaging washer 114 with the aforedescribed bolt 12 and object to be fastened 16. The added length of sleeve 170 facilitates the use of robust structures to engage bolt 12 and object it to be fastened 16. In this exemplary embodiment, sleeve 170 defines inwardly extending projections 144 in the way of dimples 144 that function similarly to and for the same purposes as inwardly extending arms 44 to engage washer 114 on bolt 12. Sleeve 170 further defines outwardly extending arms 146 including tips 148 that function similarly to and for the same purposes as outwardly extending arms 46 and tips 48 described previously, to engage washer 114 with object to be fastened 16 when tips 148 of outwardly extending arms 146 are received in channels 52.

Variations and modifications of the foregoing are within the scope of the present invention. The embodiments described herein explain the best modes known for practicing the invention and will enable others skilled in the art to utilize the invention.

Various features of the invention are set forth in the following claims.

## Claims

1. A threaded fastening system, comprising:
an object (16) to be fastened having a surface defining an elongated hole (50) in the object (16), said surface further defining a channel (52) in said hole (50);
a washer (14; 114) having an outwardly extending arm (46; 146) received in the channel (52);
a locking feature (36; 136) defined on said washer (14; 114),
**characterized by**
a bolt (12) received in the washer (14; 114) and having a projection (26) engaged with the locking feature (36; 136) and resisting relative rotation between said washer (14; 114) and said bolt (12).

2. The threaded fastening system of claim 1, said object (16) to be fastened including a plurality of channels (52), and said washer (14; 114) having a plurality of outwardly extending arms (46; 146), one said arm for each of said channel (52).

3. The threaded fastening system of claim 1 or 2, said bolt (12) including a plurality of projections (26) and said washer (14; 114) including only one said locking feature (36; 136).

4. The threaded fastening system of one of the preceding claims, said washer (14; 114) including a plurality of inwardly extending projections frictionally engaging said bolt (12).

5. The threaded fastening system of claim 4, said plurality of inwardly extending projections being a plurality of inwardly extending dimples (144).

6. The threaded fastening system of claim 4, said plurality of inwardly extending projections being a plurality of inwardly extending arms (44).

7. The threaded fastening system of one of the preceding claims, said washer (114) including an axially extending sleeve (170).

8. The threaded fastening system of claim 7, said outwardly extending arms (146) of said washer (114) extending from said sleeve (170).

9. The threaded fastening system of claim 7 or 8, said sleeve (170) including a plurality of inwardly extending projections frictionally engaging said bolt (12).

10. The threaded fastening system of one of the preceding claims, said bolt (12) including a head (20), said head (20) having the projection (26).

11. The threaded fastening system of claim 10, said locking feature (36; 136) including oppositely directed locking tabs (38, 40; 138, 140) projecting from said washer (14; 114) toward said head (20), and a space between said locking tabs (38, 40; 138, 140) receiving said projection (26).

12. The threaded fastening system of claim 10 or 11, said head (20) of said bolt (12) including at least a second said projection (26).

13. The threaded fastening system of claim 2, each of said plurality of channels (52) having an inwardly directed shoulder (54) at an entrance of the channel (52).

## Patentansprüche

1. Gewindebefestigungssystem, Folgendes umfassend:
ein zu befestigendes Objekt (16), das eine Fläche aufweist, die eine längliche Bohrung (50) im Objekt (16) definiert, wobei die Fläche ferner einen Kanal (52) in der Bohrung (50) definiert;
eine Unterlegscheibe (14; 114), die einen sich nach außen erstreckenden Arm (46; 146) aufweist, der in dem Kanal (52) aufgenommen ist;
ein auf der Unterlegscheibe (14; 114) definiertes Verriegelungsmerkmal (36; 136), **gekennzeichnet durch** einen Bolzen (12), der in der Unterlegscheibe (14; 114) aufgenommen ist und einen Vorsprung (26) aufweist, der in das Verriegelungsmerkmal (36; 136) eingreift und einer relativen Drehung zwischen der Unterlegscheibe (14; 114) und dem Bolzen (12) standhält.

2. Gewindebefestigungssystem nach Anspruch 1, wobei das zu befestigende Objekt (16) mehrere Kanäle (52) umfasst und die Unterlegscheibe (14; 114) mehrere sich nach außen erstreckende Arme (46; 146) aufweist, einen Arm für jeden Kanal (52).

3. Gewindebefestigungssystem nach Anspruch 1 oder 2, wobei der Bolzen (12) mehrere Vorsprünge (26) umfasst und die Unterlegscheibe (14; 114) nur ein Verriegelungsmerkmal (36; 136) umfasst.

4. Gewindebefestigungssystem nach einem der vorstehenden Ansprüche, wobei die Unterlegscheibe (14; 114) mehrere sich nach innen erstreckende Vorsprünge umfasst, die reibschlüssig in den Bolzen (12) eingreifen.

5. Gewindebefestigungssystem nach Anspruch 4, wobei die mehreren sich nach innen erstreckenden Vorsprünge mehrere sich nach innen erstreckende Vertiefungen (144) sind.

6. Gewindebefestigungssystem nach Anspruch 4, wobei die mehreren sich nach innen erstreckenden Vorsprünge mehrere sich nach innen erstreckende Arme (44) sind.

7. Gewindebefestigungssystem nach einem der vorstehenden Ansprüche, wobei die Unterlegscheibe (114) eine sich axial erstreckende Muffe (170) umfasst.

8. Gewindebefestigungssystem nach Anspruch 7, wobei sich die sich nach außen erstreckenden Arme (146) der Unterlegscheibe (114) von der Muffe (170) aus erstrecken.

9. Gewindebefestigungssystem nach Anspruch 7 oder 8, wobei die Muffe (170) mehrere sich nach innen erstreckende Vorsprünge umfasst, die reibschlüssig in den Bolzen (12) eingreifen.

10. Gewindebefestigungssystem nach einem der vorstehenden Ansprüche, wobei der Bolzen (12) einen Kopf (20) umfasst, wobei der Kopf (20) den Vorsprung (26) aufweist.

11. Gewindebefestigungssystem nach Anspruch 10, wobei das Verriegelungsmerkmal (36; 136) entgegengesetzt ausgerichtete Verriegelungslaschen (38, 40; 138, 140), die von der Unterlegscheibe (14; 114) zum Kopf (20) hin vorstehen, und einen Zwischenraum zwischen den Verriegelungslaschen (38, 40; 138, 140), der den Vorsprung (26) aufnimmt, umfasst.

12. Gewindebefestigungssystem nach Anspruch 10 oder 11, wobei der Kopf (20) des Bolzens (12) mindestens einen zweiten Vorsprung (26) umfasst.

13. Gewindebefestigungssystem nach Anspruch 2, wobei jeder der mehreren Kanäle (52) am Eingang des Kanals (52) eine nach innen ausgerichtete Schulter (54) aufweist.

## Revendications

1. Système de fixation fileté, comprenant :
un objet (16) à fixer présentant une surface définissant un trou allongé (50) dans l'objet (16), ladite surface définissant en outre un canal (52) dans ledit trou (50) ;
une rondelle (14 ; 114) ayant un bras s'étendant vers l'extérieur (46 ; 146) reçu dans le canal (52) ;
un moyen de verrouillage (36 ; 136) défini sur ladite rondelle (14 ; 114),
**caractérisé par**
un boulon (12) reçu dans la rondelle (14 ; 114) et ayant une projection (26) en prise avec le moyen de verrouillage (36 ; 136) et résistant à une rotation relative entre ladite rondelle (14 ; 114) et ledit boulon (12).

2. Système de fixation fileté selon la revendication 1, ledit objet (16) à fixer incluant une pluralité de canaux (52), et ladite rondelle (14 ; 114) ayant une pluralité de bras s'étendant vers l'extérieur (46 ; 146), avec l'un desdits bras pour chacun desdits canaux (52).

3. Système de fixation fileté selon la revendication 1 ou 2, ledit boulon (12) incluant une pluralité de projections (26) et ladite rondelle (14 ; 114) incluant un seul moyen de verrouillage (36 ; 136).

4. Système de fixation fileté selon l'une quelconque des revendications précédentes, ladite rondelle (14 ; 114) incluant une pluralité de projections s'étendant vers l'intérieur en prise par frottement avec ledit boulon (12).

5. Système de fixation fileté selon la revendication 4, ladite pluralité de projections s'étendant vers l'intérieur étant une pluralité d'alvéoles s'étendant vers l'intérieur (144).

6. Système de fixation fileté selon la revendication 4, ladite pluralité de projections s'étendant vers l'intérieur étant une pluralité de bras s'étendant vers l'intérieur (44).

7. Système de fixation fileté selon l'une quelconque des revendications précédentes, ladite rondelle (114) incluant une gaine s'étendant axialement (170).

8. Système de fixation fileté selon la revendication 7, lesdits bras s'étendant vers l'extérieur (146) de ladite rondelle (114) s'étendant à partir de ladite gaine (170).

9. Système de fixation fileté selon la revendication 7 ou 8, ladite gaine (170) incluant une pluralité de projections s'étendant vers l'intérieur en prise par frottement avec ledit boulon (12).

10. Système de fixation fileté selon l'une quelconque des revendications précédentes, ledit boulon (12) incluant une tête (20), ladite tête (20) possédant la projection (26).

11. Système de fixation fileté selon la revendication 10, ledit moyen de verrouillage (36 ; 136) incluant des languettes de verrouillage orientées de façon opposée (38, 40 ; 138, 140) se projetant depuis ladite rondelle (14 ; 114) vers ladite tête (20), et un espace entre lesdites languettes de verrouillage (38, 40 ; 138, 140) recevant ladite projection (26).

12. Système de fixation fileté selon la revendication 10 ou 11, ladite tête (20) dudit boulon (12) incluant au moins une seconde projection (26).

13. Système de fixation fileté selon la revendication 2, chacun de ladite pluralité de canaux (52) ayant un épaulement orienté vers l'intérieur (54) au niveau d'une entrée du canal (52).
